Europäisches Patentamt

European Patent Office

Office européen des brevets

(19)

(11) Veröffentlichungsnummer: **0 420 027 A2**

## (12) EUROPÄISCHE PATENTANMELDUNG

(21) Anmeldenummer: 90118045.5

(22) Anmeldetag: 19.09.90

(51) Int. Cl.5: **G02B 6/255**, G02B 6/30

(30) Priorität: 29.09.89 DE 3932657

(43) Veröffentlichungstag der Anmeldung:
03.04.91 Patentblatt 91/14

(84) Benannte Vertragsstaaten:
DE FR GB IT

(71) Anmelder: **Siemens Aktiengesellschaft
Wittelsbacherplatz 2
W-8000 München 2(DE)**

(72) Erfinder: **Stein, Karl-Ulrich, Dr.
Isartalstrasse 14
W-8025 Unterhaching(DE)**

(54) **Koppelanordnung zum optischen Koppeln einer Faser mit einem auf einem Substrat integrierten planaren optischen Wellenleiter.**

(57)
2.1. Bei einer Koppelanordnung der genannten Art, bei der eine Endfläche des planaren Wellenleiters und eine Endfläche der Faser einander gegenüberliegen, soll die Faser unmittelbar auf einer die Endfläche des Wellenleiters enthaltenden Endfläche des Substrats durch Verschweißen befestigbar sein.

2.2. Dazu ist das Substrat (10) mit dem Wellenleiter (2) Bestandteil eines Trägerkörpers (1), der so ausgebildet ist, daß die Endfläche (21) des Nellenleiters (2) in einer Endfläche (12) des Trägerkörpers (1) liegt, daß in der Endfläche (12) des Trägerkörpers (1) zwei Öffnungen (101, 110) ausgebildet sind, zwischen denen der Wellenleiter (2) angeordnet ist, daß die Endfläche (12) des Trägerkörpers (1) eine ähnliche Abmessung wie der Außendurchmesser der Faser (3) aufweist, und daß an die Endfläche (12) des Trägerkörpers (1) die Endfläche (31) der Faser (3) an ihrem äußeren Umfang angeschweißt ist.

2.3. Anwendung bei Silizium-Mikromechanik-Einheiten

## FIG 1

EP 0 420 027 A2

## KOPPELANORDNUNG ZUM OPTISCHEN KOPPELN EINER FASER MIT EINEM AUF EINEM SUBSTRAT INTEGRIERTEN PLANAREN OPTISCHEN WELLENLEITER

Die Erfindung betrifft eine Koppelanordnung zum optischen Koppeln einer Faser mit einem auf einem Substrat integrierten planaren optischen Wellenleiter nach dem Oberbegriff des Patentanspruchs 1.

Eine Koppelanordnung der genannten Art ist in der europäischen Patentanmeldung 89 116 456.8 (= GR 88 P 1674) vorgeschlagen. Bei dieser Koppelanordnung ist die Faser in einer zum planaren Wellenleiter führenden Nut mit V-förmigem Profil angeordnet.

Aufgabe der Erfindung ist es, eine einfach und kostengünstig herstellbare Koppelanordnung der genannten Art anzugeben, bei der die Faser durch Verschweißen mit dem Substrat mit hohem Koppelwirkungsgrad an den planaren Wellenleiter stoßkoppelbar ist.

Diese Aufgabe wird durch die im kennzeichnenden Teil des Patentanspruchs 1 angegebenen Merkmale gelöst.

Bevorzugte und vorteilhafte Ausgestaltungen der erfindungsgemäßen Anordnung gehen aus den Unteransprüchen hervor.

Die Erfindung wird in der nachfolgenden Beschreibung anhand der Figuren beispielhaft näher erläutert. Es zeigen:

Figur 1 eine Längsschnitt durch ein Ausführungsbeispiel der erfindungsgemäßen Koppelanordnung, und

Figur 2 eine Draufsicht auf die Endfläche des Trägerkörpers des Beispiels nach Figur 1.

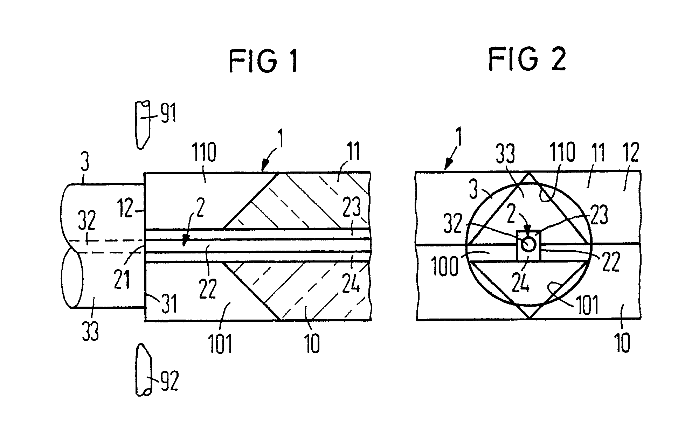

Bei dem Ausführungsbeispiel nach Figur 1 und 2 ist der planare Wellenleiter 2 an der Oberfläche des Substrats 10 aus Silizium integriert und von einem Deckkörper 11 aus Silizium abgedeckt. Das Substrat 10 und der Deckkörper 11 bilden zusammen den Trägerkörper 1, der somit aus zwei Siliziumteilen besteht und der eine Endfläche 12 aufweist, in der die Endfläche 21 des planaren Wellenleiters angeordnet ist.

In dieser Endfläche 12 des Trägerkörpers 1 sind dreieckförmige Öffnung 101 und 110 ausgebildet, die sich von dieser Endfläche 12 parallel zum planaren Wellenleiter 2 in die Tiefe des Trägerkörpers 1 erstrecken. Die in der Zeichnung oberhalb des planaren Wellenleiters 2 im Deckkörper ausgebildete Öffnung 110 ist in Bezug auf den dreieckförmigen Querschnitt so angeordnet, daß eine Dreieckseite dieses Querschnitts parallel zu der in der Zeichnung waagerecht verlaufenden Ebene des planaren Wellenleiters 2 ist, und die dieser Dreieckseite gegnüberliegende Spitze dieses Dreiecks vom Wellenleiter 2 fortweist. Die unterhalb des Wellenleiters 2 im Substrat 10 ausgebildete Öffnung 101 ist in Bezug auf den dreieckförmigen Querschnitt so angeordnet, daß eine Dreieckseite dieses Querschnitts parallel zur Ebene des Wellenleiters 2 ist und die dieser Dreieckseite gegenüberliegende Spitze des Dreiecks von dem Wellenleiter 2 nach unten fortweist.

Beide Öffnungen 101 und 110 bilden in Draufsicht zusammen im wesentlichen ein Viereck mit einem zwei einander gegenüberliegende Eckpunkte dieses Vierecks diagonal verbindenden Steg 100 des Trägerkörpers 1, der zwischen den beiden Öffnung 101 und 110 verbleibt und in dem der planare Wellenleiter 2 mit dem Ende 21 angeordnet ist.

Die Öffnungen 101 und 110 können durch anisotropes Ätzen des Siliziums des Substrats 10 bzw. des Deckkörpers 11 hergestellt werden.

An die Endfläche 12 des Trägerkörpers 1, die eine dem Außendurchmesser der Faser 3 ähnliche Abmessung aufweist, wird die Faser 3 mit ihrer Endfläche 31 flach angesetzt und an ihrem Umfang durch Aufschmelzen im Lichtbogen am Trägerkörper 1 fixiert, wobei die Faser 3 und der Trägerkörper 1 kontrolliert durch eine geregelte Positionierung vor und während der Anwendung des Lichtbogens mit der Faser 3 verschweißt werden, so daß die Faser 3 und der planare Wellenleiter 2 im wesentlichen koaxial sind (zur Schweißtechnik siehe Optpelektronik Magazin, Vol. 4, Nr. 6/7, 1988, S. 556ff). Die den Lichtbogen erzeugenden Schweißelektroden sind in der Figur 1 mit 91 und 92 bezeichnet.

In den Figuren besteht die Faser 3 aus einer Kern-Mantel-Faser mit einem Kern 32 und einem den Kern umgebenden Mantel 33. Der planare Wellenleiter besteht aus einer Kernschicht 22 und zwei Mantelschichtne 23 und 24, zwischen denen die Kernschicht angeordnet ist.

### Ansprüche

1. Koppelanordnung zum optischen Koppeln einer Faser (3) mit einem auf einem Substrat (10) integrierten planaren optischen Wellenleiter (2), wobei eine Endfläche (21) des planaren Nellenleiters (2) und eine Endfläche (31) der Faser (3) einander gegenüberliegen, **dadurch gekennzeichnet, daß** das Substrat (1) mit dem Wellenleiter (2) Bestandteil eines Trägerkörpers (1) ist, der so ausgebildet ist, daß die Endfläche (21) des Wellenleiters (2) in einer Endfläche (12) des Trägerkörpers (1) liegt, daß in dieser Endfläche (12) des Trägerkörpers (1) zwei Öffnungen (101, 110) ausgebildet sind, zwischen denen der Wellenleiter (2) angeordnet ist, daß die Endfläche (12) des Trägerkörpers (1) eine ähnliche Abmessung wie der Außendurchmesser der Faser (3) aufweist, und daß an die Endfläche (12) des Trägerkörpers (1) die Endflächec (31) der Faser (3) an ihrem äußeren Umfang angeschweißt ist.

2. Koppelanordnung nach Anspruch 1, **dadurch gekennzeichnet,** daß die beiden Öffnugnen (101, 110) jeweils dreieckförmigen Querschnitt aufweisen.

3. Koppelanordnung nach Anspruch 1 oder 2, **dadurch gekennzeichnet,** daß der Trägerkörper (1) aus dem den Wellenleiter (2) tragenden Substrat (10) und aus einem auf dem Substrat (10) aufgebrachten Deckkörper (11) besteht.

4. Koppelanordnung nach einem der vorhergehenden Ansprüche, **dadurch gekennzeichnet,** daß der Trägerkörper (1) aus anisotrop ätzbarem Material besteht.

5. Koppelanordnung nach Anspruch 4, **dadurch gekennzeichnet,** daß der Trägerkörper (1) aus Silizium besteht.

EP 0 420 027 A2

FIG 1

FIG 2

4